# EUROPEAN PATENT APPLICATION

(11) **EP 4 435 954 A1**
(43) Date of publication of application: **25.09.2024**
(21) Application number: 23843256.1
(22) Date of filing: 12.07.2023
(51) Int. Cl.: H01M 50/367, H01M 50/242, H01M 50/342, H01M 50/209, H01M 50/249

(54) **BATTERY PACK AND DEVICE INCLUDING SAME**

(30) Priority: 20.07.2022 KR 20220089869; 11.07.2023 KR 20230090045
(71) Applicant: LG Energy Solution, Ltd., Seoul 07335 (KR)
(72) Inventor: PARK, Jin Yong, Daejeon 34122 (KR); LEE, Myungwoo, Daejeon 34122 (KR); KWON, Wooyong, Daejeon 34122 (KR); CHI, Ho June, Daejeon 34122 (KR); KIM, Seung Joon, Daejeon 34122 (KR); JUNG, Seyun, Daejeon 34122 (KR); KIM, Insoo, Daejeon 34122 (KR)
(74) Representative: Plasseraud IP
(86) International application number: PCT/KR2023/009910
(87) International publication number: WO 2024/019405

(57) **Abstract**

A battery pack according to one embodiment of the present disclosure includes a battery cell assembly including a plurality of stacked battery cell units; a pack tray on which the battery cell assembly is mounted; a pack cross beam located on one side surface of the battery cell assembly on the pack tray and provided with a gas passage at its inside; and a venting unit located on an upper part of the battery cell assembly, wherein the battery cell unit comprises at least one battery cell and a cell cover that partially surrounds the at least one battery cell, wherein the cell cover is formed with at least one venting part, wherein the venting unit comprises a plurality of venting channels that guide the gas jetted from the venting unit to the gas passage, and wherein each of the venting channels is located so as to correspond to each of the battery cell units.

## Description

### [TECHNICAL FIELD]

### Cross Citation with Related Application(s)

This application claims priority benefit of Korean Patent Application No. 10-2022-0089869, filed on July 20, 2022, and Korean Patent Application No. 10-2023-0090045, filed on July 11, 2022, the contents of each of which are incorporated herein by their reference.

The present disclosure relates to a battery pack and a device including the same, and more particularly, to a cell-to-pack (CTP) type battery pack that allows venting gas to be discharged outside the battery pack along a specific path when a thermal event occurs, thereby minimizing the thermal runaway transition inside the battery pack and preventing structural collapse, and a device including the same.

### [BACKGROUND]

Currently, the secondary battery has been widely used as an energy source for wireless mobile devices or wearable devices, which are small multifunctional products, and has also been used as an energy source for electric vehicles and hybrid electric vehicles presented as alternatives to existing gasoline and diesel vehicles or as an energy storage system (ESS).

Generally, secondary batteries have an operating voltage of approximately 2.5V to 4.5V per one battery. Therefore, in the case of electric vehicles or energy storage systems that require large capacity and high output, a battery module in which a plurality of secondary batteries are connected in series and/or in parallel, and a battery pack in which the battery modules are connected in series and/or in parallel are used as energy sources. In other words, a conventional battery pack includes a battery module as the subordinate concept, and the battery module includes battery cells as the subordinate concept. Additionally, the number of battery cells included in the battery module or the number of battery modules included in the battery pack can be variously determined depending on the output or capacity of the battery pack required for the electric vehicle.

On the other hand, conventional battery packs may be disadvantageous in terms of energy density. Typically, in the process of housing a plurality of battery cells in a module case and modularizing them, due to several components such as module cases or stacking frames, the volume and weight of the battery pack may be unnecessarily increased, or the space occupied by the battery cells may be reduced. Furthermore, not only the space occupied by the components themselves, such as module cases and stacking frames, but also the housing space of the battery cells may be reduced in order to ensure assembly tolerances for these components. Therefore, in the case of conventional battery packs, it may generate a limit for enhancing the energy density.

Additionally, in the case of conventional battery packs, one of the typically important issues is safety. In particular, when a thermal event occurs in one of the multiple battery cells included in the battery pack, it is necessary to block this event from propagating to other battery cells.

If thermal propagation between battery cells is not properly suppressed, this may lead to thermal events in other battery cells included in the battery pack, which causes greater problems such as ignition or explosion of the battery pack. Furthermore, the ignition or explosion occurring in the battery pack can cause great damage to human life or property in the surrounding area. Therefore, such battery packs are required to have a configuration that can appropriately control the above-mentioned thermal events.

### [DETAILED DESCRIPTION OF THE INVENTION)

### [Technical Problem]

It is an object of the present disclosure to provide a CTP type battery pack that eliminates the configuration of the battery module and is assembled in battery cell units, thereby improving the assembly process and energy density of the battery pack.

It is another object of the present disclosure to provide a CTP type battery pack that guides venting gas to move along a preplanned specific path and discharge to the outside of the battery pack in preparation for a thermal event. Accordingly, thermal runaway transition between battery cells within the battery pack can be minimized, and structural collapse of the battery pack can be prevented.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery pack comprising: a battery cell assembly including a plurality of stacked battery cell units; a pack tray on which the battery cell assembly is mounted; a pack cross beam located on one side surface of the battery cell assembly on the pack tray and provided with a gas passage at its inside; and a venting unit located on an upper part of the battery cell assembly, wherein the battery cell unit comprises at least one battery cell and a cell cover that partially surrounds the at least one battery cell, wherein the cell cover is formed with at least one venting part, wherein the venting unit comprises a plurality of venting channels that guide the gas jetted from the venting unit to the gas passage, and wherein each of the venting channels is located so as to correspond to each of the battery cell units.

Each of the venting channels may have independent venting spaces that are not shared with each other.

The venting channels may be partitioned by a partition wall portion inside the venting unit.

The venting channels may extend along the longitudinal direction of the battery cell units, which is perpendicular to the direction in which the battery cell units are stacked.

Each of the venting channels may communicate with each of the battery cell units on a one-to-one basis.

The cell cover may have a shape in which the lower side is open.

The cell cover may comprise an upper surface part and side surface portions, and at least one venting part may be formed on the upper surface part.

The venting part may have the shape of a hole passing through a part of the cell cover.

The venting part may a portion of the cell cover which has a weaker stiffness than the portion adjacent thereto, and ruptures when a force or heat exceeding a certain pressure is applied.

The venting unit may comprise inlets that communicate with the venting part.

The inlet may be provided with a mesh structure.

One of the venting unit and the pack cross beam may be formed with a connecting part, and the other may be formed with a connecting hole coupled to the connecting part, and each of the connecting parts may communicate with each of the venting channels on a one-to-one basis.

The connecting parts may be fitted and coupled into the corresponding connecting holes on a one-to-one basis.

A rupture disk having a structure that ruptures at a specific pressure or higher may be provided inside at least one of the connecting part or the connecting hole.

The venting channel may communicate with the gas passage of the pack cross beam via the connecting part and the connecting hole.

The pack cross beam may comprise a plurality of mesh parts that partitions the gas passage, and the mesh parts may be located at each point between the connecting parts along the longitudinal direction of the pack cross beam.

According to another embodiment of the present disclosure, there is provided a device comprising the above-mentioned battery pack.

### [Advantageous Effects]

According to the embodiments of the present disclosure, there can be provided a battery pack that can house battery cells in a pack tray in a space-efficient manner, has higher energy density than conventional battery packs, and has a simplified assembly process.

Also, when a thermal event occurs in a battery cell, the high-temperature venting gas or flame jetted from the battery cells moves along a preplanned specific path and is discharged to the outside of the battery pack. Thereby, thermal runaway transition between battery cells within the battery pack can be minimized and structural collapse of the battery pack can be prevented.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a perspective view showing a part of a battery pack according to an embodiment of the present disclosure;
FIG. 2 is a perspective view showing a state in which the venting unit is removed from the battery pack of FIG. 1;
FIG. 3 is a perspective view showing a battery cell assembly and a venting unit according to an embodiment of the present disclosure;
FIG. 4 is an exploded perspective view of the battery cell assembly of FIG. 3;
FIG. 5 is a perspective view showing one of the battery cell units included in the battery cell assembly of FIGS. 3 and 4;
FIG. 6 is an exploded perspective view of the battery cell unit of FIG. 5;
FIG. 7 is a diagram showing a battery cell included in the battery cell unit of FIG. 6;
FIG. 8 is a perspective view showing a cell cover included in the battery cell unit of FIG. 6;
FIGS. 9 (a) and (b) are cross-sectional views taken along the cutting line C-C' of FIG. 8, respectively, which are cross-sectional views showing the embodiments of the present disclosure;
FIG. 10 is a perspective view showing a venting unit according to an embodiment of the present disclosure;
FIG. 11 is a cross-sectional view showing a part of the cross section taken along the cutting line A-A' in FIG. 1;
FIG. 12 is a cross-sectional view showing a part of the cross section taken along the cutting line B-B' in FIG. 1;
FIG. 13 is an exploded perspective view which enlarges and shows a battery cell and a busbar module included in the battery cell unit of FIGS. 5 and 6;
FIG. 14 is a perspective view showing a busbar included in the busbar module of FIGS. 5 and 6;
FIG. 15 is a perspective view showing a busbar frame included in the busbar module of FIGS. 5 and 6; and
FIG. 16 is a partial view which enlarges and shows a portion where the busbar module is mounted in the battery cell unit of FIG. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

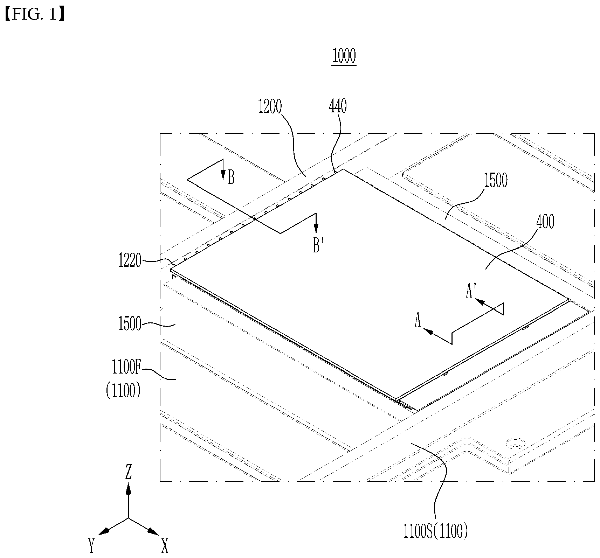

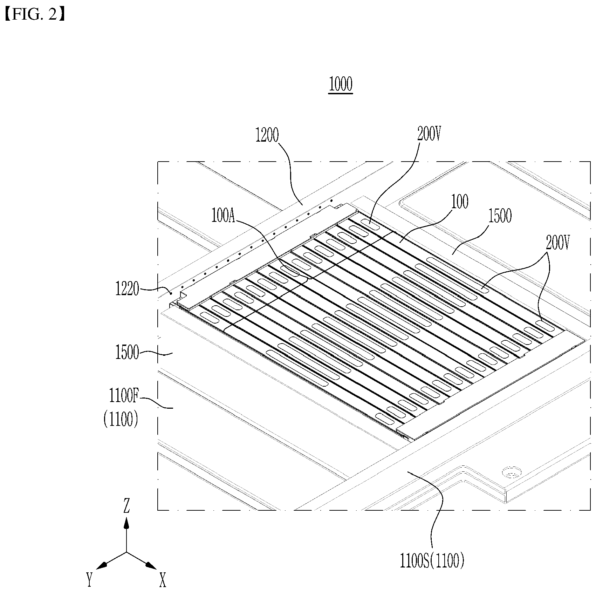

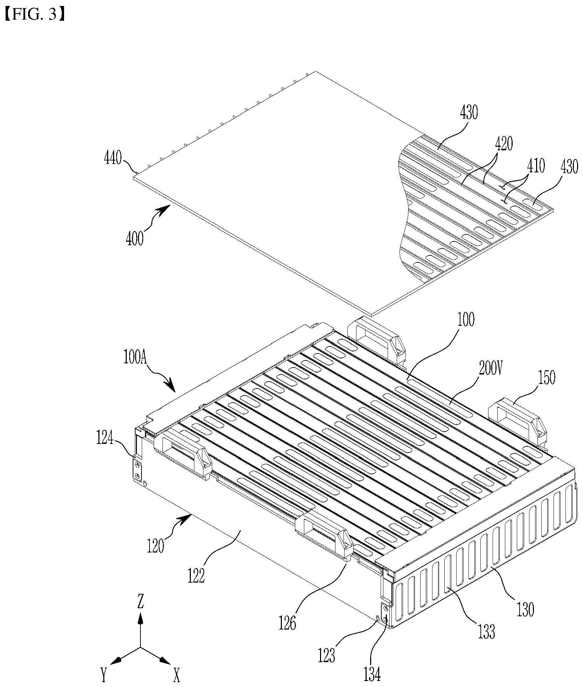

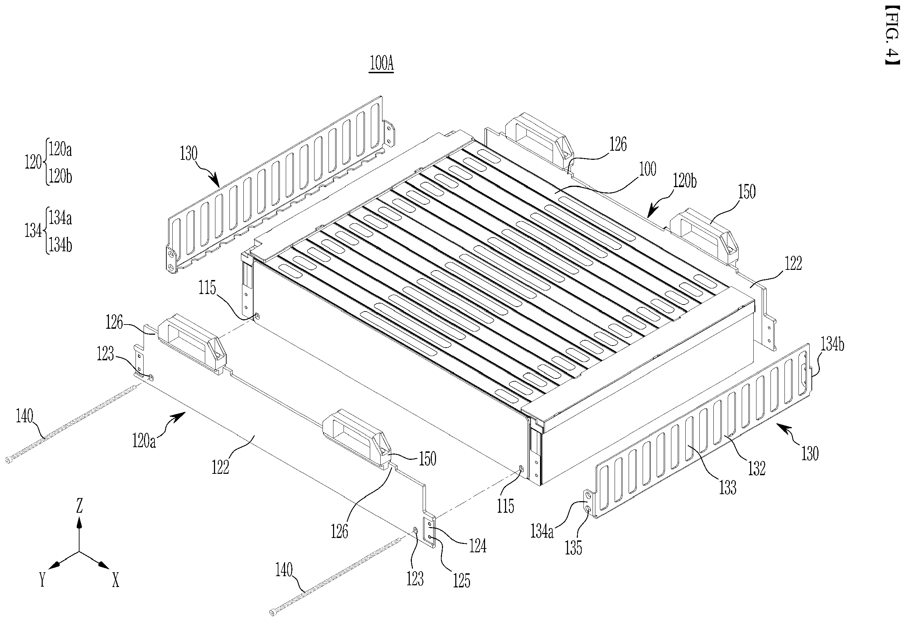

FIG. 1 is a perspective view showing a part of a battery pack according to an embodiment of the present disclosure. FIG. 2 is a perspective view showing a state in which the venting unit is removed from the battery pack of FIG. 1. FIG. 3 is a perspective view showing a battery cell assembly and a venting unit according to an embodiment of the present disclosure. FIG. 4 is an exploded perspective view of the battery cell assembly of FIG. 3.

Referring to FIGS. 1 to 4, a battery pack 1000 according to an embodiment of the present disclosure comprises a battery cell assembly 100A including a plurality of stacked battery cell units 100; a pack tray 1100 on which the battery cell assembly 100A is mounted; a pack cross beam 1200 located on one side surface of the battery cell assembly 100A on the pack tray 1100 and provided with a gas passage at its inside; and a venting unit 400 located on an upper part of the battery cell assembly 100A.

The pack tray 1100 comprises a space in which the battery cell assembly 100A is seated, and the battery cell assembly 100A can be accommodated in the seating space of the pack tray 1100. The pack tray 1100 may in the form of a box having an open upper end. That is, the pack tray 1100 may include a bottom part 1100F and a side wall part 1100S extending vertically from one corner of the bottom part 1100F, and the battery cell assembly 100A can be accommodated in a seating space formed by the bottom part 1100F and the side wall part 1100S. Meanwhile, although not specifically illustrated, the battery pack 1000 according to this embodiment may further include a pack cover that covers the open upper part of the pack tray 1100.

The battery pack 1000 according to this embodiment may comprise a pack cross beam 1200 that partitions the seating space described above. The battery cell assembly 100A mounted in the seating space can be prevented from being spaced apart by the pack cross beam 1200. Further, the battery pack 1000 according to this embodiment may include a pack side beam 1500 disposed on the other side surface of the battery cell assembly 100A. Forward/backward and right/left movement of the battery cell assembly 100A can be minimized by the pack cross beam 1200 and the pack side beam 1500, thereby preventing damage of the battery cell assembly 100A due to external vibration and impact. A gas passage is provided inside the pack cross beam 1200, which will be described later.

The pack cross beam 1200 may be configured to extend along a direction in which the battery cell units 100 are stacked within the battery cell assembly 100A, and the pack side beam 1500 may be configured to extend along a direction perpendicular to the direction in which the battery cell units 100 are stacked within the battery cell assembly 100A. For example, as shown in FIG. 2, the battery cell units 100 may be stacked along a direction parallel to the Y axis, the pack cross beam 1200 may extend along a direction parallel to this Y-axis, and the pack side beam 1500 may extend along a direction parallel to the X-axis, which is perpendicular to the Y-axis. At this time, the direction perpendicular to the direction in which the battery cell units 100 are stacked corresponds to the longitudinal direction of the battery cell unit 100, and the longitudinal direction of the battery cell unit 100 may be parallel to the X-axis.

The pack cross beam 1200 and the pack side beam 1500 may be arranged so as to be spaced apart from each other or arranged so as to intersect each other to form the plurality of seating spaces. As a specific example, the battery cell assembly 100A may be arranged in two rows inside the pack tray 1100, and the pack cross beam 1200 may be arranged across the central part of the pack tray 1100 to separate the battery cell assemblies 100A arranged in two rows. The pack side beam 1500 is arranged perpendicular to the pack cross beam 1200 so as to separate the battery cell assemblies 100A arranged in each row, and may be arranged in plural numbers at regular intervals. However, this is an example of the internal structure of the battery pack 1000, and the structure of the battery pack 1000 of the present embodiment is not limited to the examples mentioned above.

On the other hand, as mentioned above, the battery cell assembly 100A of this embodiment may be provided in a state where a separate frame protecting the outer surfaces of the battery cell units 100 is minimized. That is, the battery cell assembly 100A of the present embodiment may have a module-less structure. Here, the module-less structure may refer to a cell-to-pack structure in which the battery cell structure is directly coupled to the battery pack structure without a module frame.

Typically, conventional battery packs 1000 have a double assembly structure in which a plurality of battery cells and several components connected thereto are assembled to form a battery module, and the plurality of battery modules are housed in the battery pack 1000 again. At this time, since the battery module comprises a module frame or the like that forms its outer surface, conventional battery cells are doubly protected by the module frame of the battery module and the pack tray 1100 of the battery pack 1000. However, such a double assembly structure not only increases the manufacturing unit cost and the manufacturing process of the battery pack 1000, but also has a disadvantage that reassembly performance is deteriorated when defects occur in some battery cells. Further, when the cooling member or the like exists outside the battery module, there is a problem that a heat transfer path between the battery cell and the cooling member becomes slightly complicated.

Thus, the unit module mounted on the battery pack 1000 in the present embodiment can be provided in the form of a 'battery cell assembly' in which the module frame is omitted. Thereby, the structure of the battery pack 1000 can be simplified, advantages in terms of manufacturing cost and manufacturing process can be obtained, and the effect of weight reduction of the battery pack 1000 can be achieved.

In the case of this embodiment, there is no need to further provide a module case, a stacking frame, or fastening members such as bolts for maintaining the stacked state of the battery cells, as in conventional battery modules or battery packs. That is, in this embodiment, as the space occupied by the component is removed, the battery cell can occupy more space, thereby further improving the energy density, reducing the overall volume and weight, and simplifying the manufacturing process.

Next, the battery cell assembly, the battery cell unit, and the battery cell according to this embodiment will be described in detail.

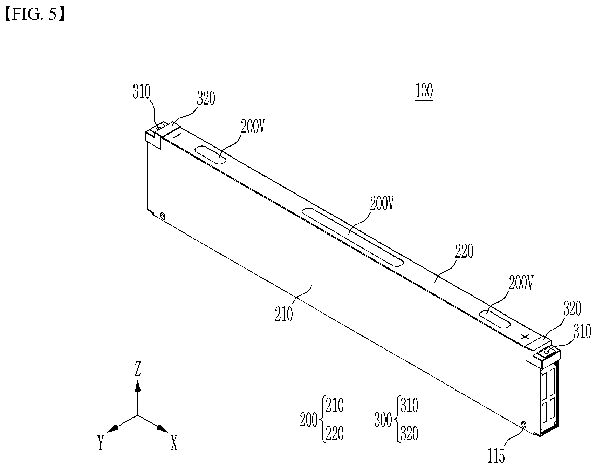

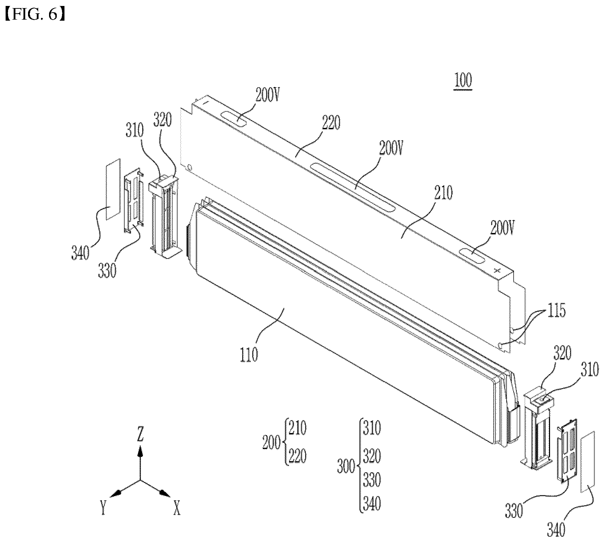

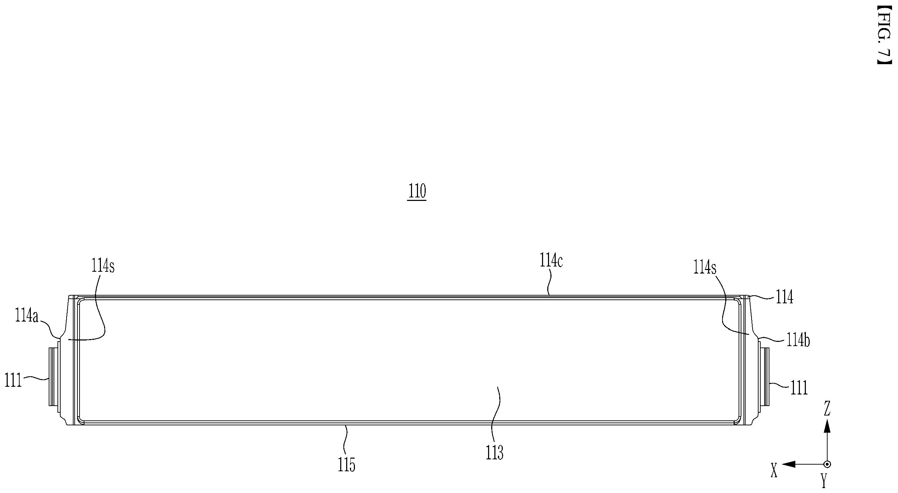

FIG. 5 is a perspective view showing one of the battery cell units included in the battery cell assembly of FIGS. 3 and 4. FIG. 6 is an exploded perspective view of the battery cell unit of FIG. 5. FIG. 7 is a diagram showing a battery cell included in the battery cell unit of FIG. 6.

Referring to FIGS. 4 to 7 together, the battery cell assembly 100A according to an embodiment of the present disclosure includes a plurality of battery cell units 100 stacked along one direction. The battery cell unit 100 according to an embodiment of the present disclosure includes at least one battery cell 110, and a cell cover 200 that partially surrounds the at least one battery cell 110.

The battery cell 110 according to the present embodiment may be various types of battery cells, for example, a pouch-type battery cell, a prismatic battery cell, or a cylindrical battery cell. In one example, as shown in FIG. 7, the battery cell 110 according to the present embodiment may be a pouch-type battery cell. Below, a pouch-type battery cell will be described, but the battery cell 110 according to this embodiment is not limited thereto, and various types of battery cells can be applied.

The battery cell 110 according to the present embodiment may have a shape in which an electrode assembly having electrode leads 111 protruding in one direction or in both directions is housed in a pouch case 114. Such a battery cell 110 may have a rectangular sheet shape. The battery cell 110 can be formed by housing an electrode assembly in a pouch case 114 made of a laminated sheet including a resin layer and a metal layer and then bonding the outer periphery of the pouch case 114. As an example, the battery cell 110 may have a structure in which two electrode leads 111 face each other and protrude from one end part 114a and the other end part 114b of the cell body 113, respectively. In another embodiment, a structure in which the electrode leads 111 of the battery cells 110 all protrude in one direction is also possible. One of the electrode leads 111 is a cathode lead, and the other is an anode lead.

The battery cell 110 can be produced by joining both ends 114a and 114b of a pouch case 114 and one side part 114c connecting them in a state in which an electrode assembly (not shown) is housed in a pouch case 114. In other words, the battery cell 110 according to an embodiment of the present disclosure has a total of three sealing parts 114s, wherein the sealing parts 114s have a structure that is sealed by a method such as thermal fusion, and the remaining other side part may be composed of a folding part 115. That is, the battery cell 110 according to the present embodiment may be a pouch-type secondary battery in which the electrode assembly is housed inside the pouch case 114 and the outer periphery of the pouch case 114 is sealed to form a sealing part 114s. FIG. 7 shows only the case where both end parts 114a and 114b of the pouch case 114 is formed with sealing parts 114s, and a sealing part is not shown on the side facing the folding part 115, but the sealing part on the side facing the folding part 115 is in a state of being folded to one side after sealing is completed for space utilization.

The pouch case 114 made of the laminate sheet may include an inner resin layer for sealing, a metal layer to prevent penetration of materials, and an outermost outer resin layer. Based on the electrode assembly inside the pouch case 114, the inner resin layer may be located at the innermost side, the outer resin layer may be located at the outermost side, and the metal layer may be located between the inner resin layer and the outer resin layer.

In order to protect the electrode assembly from the outside, the outer resin layer has excellent tensile strength and weather resistance relative to the thickness and may have electrical insulation properties. Such an outer resin layer may include polyethylene terephthalate (PET) resin or nylon resin. The metal layer can prevent air, moisture, and the like from flowing into the pouch-type secondary battery. Such a metal layer can include aluminum (Al). The inner resin layers may be heat-sealed to each other by heat and/or pressure applied in a state where the electrode assembly is embedded. Such an inner resin layer may include casted polypropylene (CPP) or polypropylene (PP).

The pouch case 114 is divided into two portions, wherein at least one of the two portions may be formed with a concave housing part in which the electrode assembly can be seated. Along the outer periphery of this housing part, the inner resin layers of the two portions of the pouch case 114 may be joined to each other to provide a sealing part 114s. The pouch case can be sealed in this way to manufacture the battery cell 110, which is a pouch-type secondary battery.

Within the battery cell unit 100, the battery cells 110 may be comprised of one or more batteries. As an example, FIG. 6 shows that the battery cell unit 100 includes three battery cells 110. A plurality of battery cells 110 may be stacked so that they can be electrically connected to each other. In particular, a plurality of battery cells 110 may be stacked along a direction parallel to the y-axis while standing upright so as to face one surface each of the cell body 113. Thereby, the electrode lead 111 can protrude in a direction perpendicular to the direction in which the battery cells 110 are stacked. In the battery cell 110, one electrode lead 111 may protrude toward the x-axis direction, and the other electrode lead 111 may protrude toward the -x-axis direction. In the case of the battery cells in which electrode leads 111 protrude in only one direction, the electrode leads 111 may protrude in the x-axis direction or the -x-axis direction.

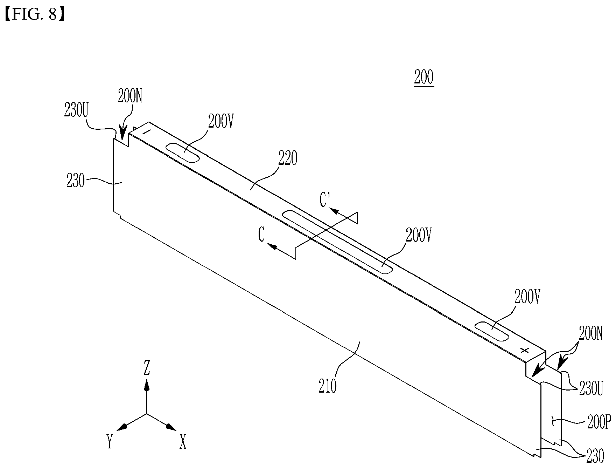

FIG. 8 is a perspective view showing a cell cover included in the battery cell unit of FIG. 6.

Referring to FIGS. 5 to 8 together, the cell cover 200 according to this embodiment partially surround at least one battery cell 110, as described above. The cell cover 200 may include a side surface part 210 and an upper surface part 220. The side surface part 210 may cover one side surface of the battery cell 110, and the upper surface part 220 may cover the upper part of the battery cell 110. The cell cover 200 may include two side surface parts 210 and one upper surface part 220. One surface of the side surface parts 210 and one surface of the upper surface part 220 may be perpendicular, and the side surface parts 210 may extend downward from both opposite sides of the upper surface part 220. The cell cover 200 according to this embodiment may have a shape in which the lower side is open. That is, when the cell cover 200 is cut along the yz plane in FIG. 8, the cell cover 200 may have an 'n' shape. The cell cover 200 may be provided so as to surround at least a part of three of the remaining four surfaces of the six-sided battery cell 110 excluding the two surfaces on which the electrode leads 111 are formed.

The cell cover 200 can not only delay a thermal runaway phenomenon, but also supplement the stiffness of the battery cell 110, so that the battery cell 110 can maintain an upright state. The cell cover 200 can cover at least a part of the battery cells 110 to thereby support the battery cells 110, and can stably maintain the stacked state of the battery cells 110 arranged upright in one direction. More specifically, the side surface parts 210 of the cell cover 200 support the side surfaces of the battery cell 110, so that the upright state of the battery cells 110 can be maintained. Moreover, the lower side edge of the cell cover 200 can be seated on the thermal resin layer 1300 on the bottom part 1100F of the pack tray 1100, through which the cell cover 200 is self-supportable, and the upright state of the battery cells 110 inside the cell cover 200 can be maintained.

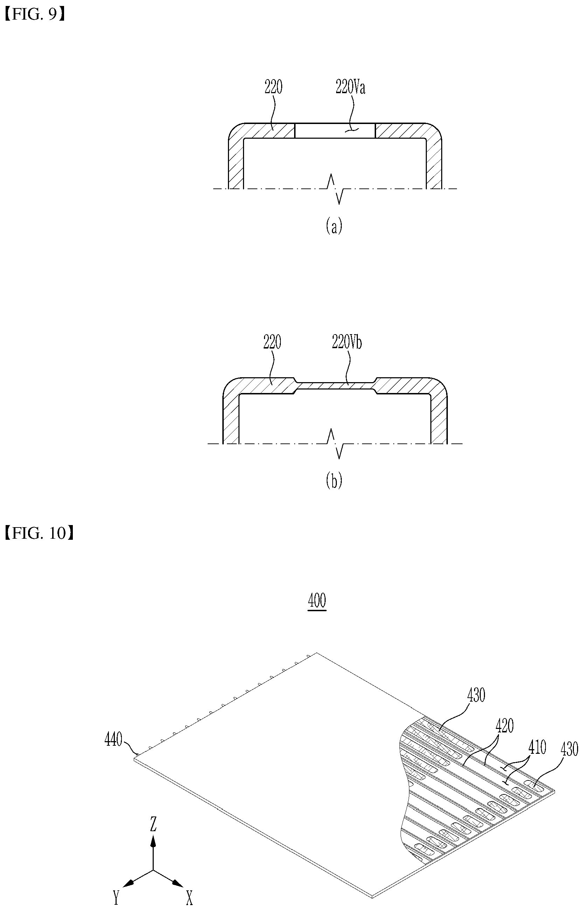

FIGS. 9 (a) and (b) are cross-sectional views taken along the cutting line C-C' of FIG. 8, respectively, which are cross-sectional views showing the embodiments of the present disclosure.

Referring to FIG. 8 and FIGS. 9(a) and (b), the cell cover 200 according to this embodiment may be formed with at least one venting part 200V. The at least one venting part 200V may be formed on the upper surface part 220 of the cell cover 200.

When thermal runaway occurs in at least one battery cell 110 inside the cell cover 200 to generate high temperature gas and flame, the venting part 200V formed in the cell cover 200 functions as a passage for discharging such high-temperature gas and flame to the venting unit 400, which will be described later. As long as efficient discharge of gas and flame is possible, the number and area of the venting part 200V provided in one cell cover 200 are not especially limited. As an example, as shown in FIG. 8, and the like, three venting parts 200V may be formed on the upper surface part 220 of the cell cover 200, and the area of the venting part 200V formed in the center may be slightly larger than the areas of the other venting parts 200V.

Conventionally, when ignition occurs in the battery cell 110, gas, sparks and the like move in the direction of the electrode lead 111, which causes a problem that an additional thermal runaway phenomenon occurs. However, in the present embodiment, the venting part 200V is formed in the cell cover 200, so that movement of gas and sparks in the direction where the electrode lead 111 is located can be minimized. The gas discharge path by the venting part 200V may be spaced apart from the electrode lead 111, and the electrode lead 111 and the electrical components connected thereto can be prevented from being damaged by gas, sparks, or flames, or the like.

As shown in FIG. 9(a), the venting part 200Va according to an embodiment of the present disclosure may be in the form of a hole that partially penetrates in the upper surface part 220 of the cell cover 200. Alternatively, as shown in FIG. 9(b), the venting part 200Vb according to another embodiment of the present disclosure makes the stiffness of a part of the upper surface part 220 relatively much weaker than that of the parts adjacent thereto, so that when force or heat above a certain pressure is applied, this part may be the portion to be ruptured.

According to such embodiments, when high-temperature gas or flame blows out from at least one battery cell 110 surrounded by the cell cover 200, high-temperature gas or flame is discharged through the venting part 200V, and can be guided into the inside of the venting unit 400, which will be described later.

Next, the venting unit 400 according to the present embodiment will be described in detail.

FIG. 10 is a perspective view showing a venting unit according to an embodiment of the present disclosure.

Referring to FIGS. 2, 3, 5, 6, 8 and 10 together, the venting unit 400 according to the present embodiment is located in the upper part of the battery cell assembly 100A. Further, the venting unit 400 includes a plurality of venting channels 410 that guide gas jetted from the venting part 200V of the cell cover 200 to the gas passage of the pack cross beam 1200, which will be described later, wherein each of the venting channels 410 is located so as to correspond to each of the battery cell units 100. When a thermal event occurs in a battery cell 110 included in a specific battery cell unit 100 and high temperature gas is jetted from the battery cell unit 100, the venting unit 400 can guide high-temperature gas so as to flow from the venting part 200V of the corresponding battery cell unit 100 to the inside of the pack cross beam 1200.

The venting unit 400 includes a plurality of venting channels 410, which are passages through which gas can move. Each of the venting channels 410 may have independent venting spaces that are not shared with each other. The venting unit 400 may include a partition wall part 420 that partitions the internal space, and the venting channels 410 may be partitioned by a partition wall part 420 inside the venting unit 400.

The venting unit 400 may be a box-shaped structure with an internal space, and this internal space may be partitioned by the partition wall part 420 to provide a venting channel 410. The venting channels 410 are completely closed from each other by the partition wall part 420, so they do not share spaces with each other and can have independent venting paths. Thereby, high-temperature gas or flame passing through one venting channel 410 is not propagated to other adjacent venting channels 410.

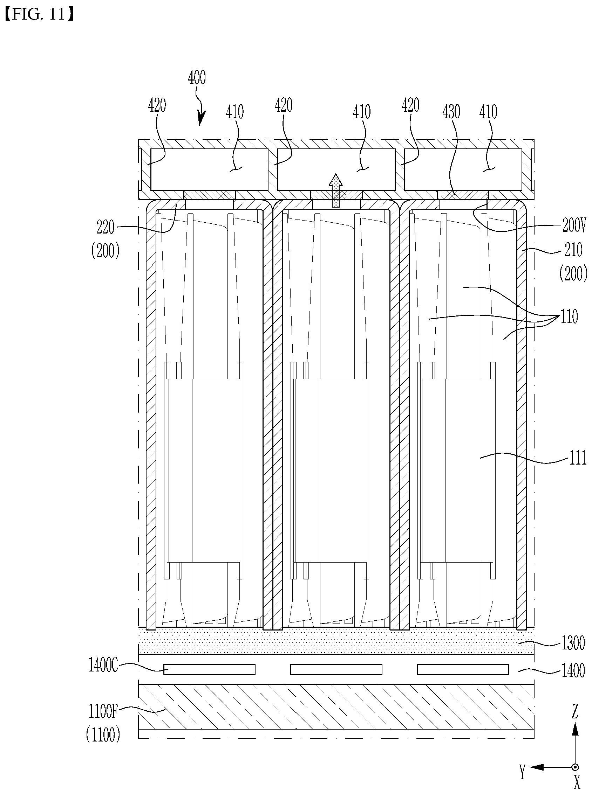

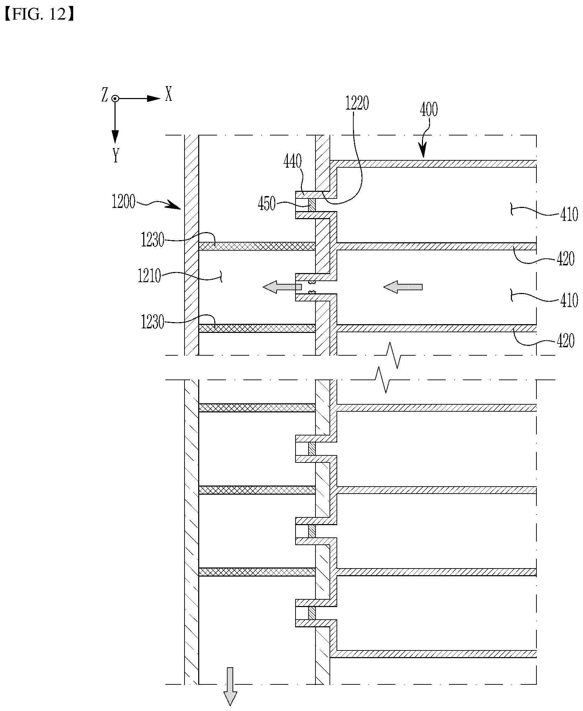

FIG. 11 is a cross-sectional view showing a part of the cross section taken along the cutting line A-A' in FIG. 1. FIG. 12 is a cross-sectional view showing a part of the cross section taken along the cutting line B-B' in FIG. 1.

Referring to FIGS. 3, 6, 8, 10, 11 and 12 together, the venting unit 400 according to the present embodiment may include inlets 430 that communicate with the venting part 200V of the battery cell unit 100. The inlets 430 may be formed on the lower surface of the venting unit 400, and high-temperature gas and flame discharged through the venting part 200V may flow into the inside of the venting channel 410 through the inlet 430.

The venting channel 410 may extend along the longitudinal direction of the battery cell unit 100, which is perpendicular to the direction in which the battery cell units 100 are stacked. Additionally, each of the venting channels 410 may communicate with each of the battery cell units 100 on a one-to-one basis. That is, the number of venting channels 410 may match the number of battery cell units 100 in the battery cell assembly 100A, and one of the battery cell units 100 may communicate only with the venting channel 410 located in the upper part thereof and may not communicate with the other venting channel 410.

High-temperature gas and flame generated from one of the battery cell units 100 are discharged only to the venting channel 410 communicating therewith, and movement to other venting channels 410 is restricted. In the battery cell assembly 100A according to the present embodiment, the battery cells 110 are housed in the cell cover 200 to constitute the battery cell unit 100. High-temperature gas or flame resulting from a thermal runaway phenomenon occurring in one of the battery cell units 100 is blocked by the side surface part 210 of the cell cover 200 and cannot propagate to other adjacent battery cell units 100. The cell cover 200 may be made from a material having a high melting point so that it does not melt even during thermal runaway phenomenon. Further, the cell cover 200 may be made from a material having a mechanical strength exceeding a predetermined range so that it can stably support the battery cell 110, thereby protecting the battery cell 110 from external shocks, etc. Examples of the materials used for the cell cover 200 include steel, stainless steel (SUS), and the like.

Further, when high-temperature gas or flame is discharged from the upper part of the battery cell unit 100 to the corresponding venting channel 410 on a one-to-one basis, each of the venting channels 410 has independent venting spaces that are not shared with each other, so that high-temperature gas or flame does not flow into other adjacent venting channels 410. Therefore, there is no danger of high-temperature gas or flame flowing back into the other adjacent venting channel 410 and the other battery cell unit 100 located below it. If the venting spaces of the venting channels 410 are shared with each other, the battery cell unit 100 and other adjacent battery cell units 100 where thermal runaway phenomenon occurred have relatively low internal pressure, whereby there is a risk that the generated high-temperature gas or flame may flow into the inside. In this embodiment, by realizing an independent venting path for each battery cell unit 100, thermal runaway transition between battery cells 110 can be minimized and structural collapse of the battery pack can be prevented.

On the other hand, the inlet 430 according to the present embodiment may be provided with a mesh structure. The mesh structure may be formed from a metal material. When metal particles contained in high-temperature gas or flame pass through the inlet 430, they can be filtered by the mesh structure, and the metal particles can hit against the mesh structure to lower the temperature and reduce the risk of explosion.

On the other hand, according to the present embodiment, the venting unit 400 and the pack cross beam 1200 may be connected to each other. Specifically, a connecting part can be formed in any one of the venting unit 400 and the pack cross beam 1200, and a connecting hole coupled to the connecting part may be formed on the other side. For example, as shown in FIG. 12, a connecting part 440 may be formed in the venting unit 400, and a connecting hole 1220 into which the connecting part 440 is inserted may be formed in the pack cross beam 1200. As another embodiment, it is of course possible that the pack cross beam 1200 is formed with a connecting part, and the venting unit 400 is formed with a connecting hole into which the connecting part of the pack cross beam 1200 is inserted.

The connecting part 440 according to the present embodiment may be in the form of a pipe so as to be inserted and coupled to the connecting hole 1220. The connecting parts 440 may be fitted and coupled to the corresponding connecting holes 1220 on a one-to-one basis. Additionally, each of the connecting parts 440 may communicate with each of the venting channels 410 on a one-to-one basis.

As mentioned above, a gas passage 1210 is provided inside the pack cross beam 1200. That is, the pack cross beam 1200 may be provided with a hollow structure so as to function as a passage for discharging venting gas to the outside. Through the connection between the connecting part 440 and the connecting hole 1220, the venting channel 410 of the venting unit 400 and the gas passage 1210 in the pack cross beam 1200 can be communicated with each other. That is, the venting channel 410 may communicate with the gas passage 1210 of the pack cross beam 1200 through the connecting part 440 and the connecting hole 1220.

Accordingly, high-temperature gas or flame moving along the venting channel 410 moves to the gas passage 1210 of the pack cross beam 1200 through the connecting part 440 and the connecting hole 1220, and finally can be discharged to the outside of the battery pack 1000. The pack cross beam 1200 according to this embodiment can not only prevent movement or separation of the battery cell assembly 100A, but also can perform a venting function which discharges high-temperature gas and flame generated by the thermal runaway phenomenon of the battery cell unit 100 to the outside of the battery pack 1000.

On the other hand, a rupture disk 450 having a structure that ruptures at a specific pressure or higher may be provided inside at least one of the connecting part 440 or the connecting hole 1220 according to the present embodiment. The specific pressure can be adjusted by the thickness or material of the rupture disk 450. In terms of the structure, the rupture disk 450 is more preferably provided inside the connecting part 440. The rupture disk 450 may be constructed of a membrane structure that ruptures at a specific pressure or higher.

The gas jetted from one of the battery cell units 100 is guided to flow along the venting channel 410 corresponding to the battery cell unit 100, and the rupture disk 450 of the connecting part 440 corresponding to the venting channel 410 is ruptured by the pressure of the gas, and is thereby discharged into the gas passage 1210 of the pack cross beam 1200. And, as shown in FIG. 12, the gas flow in the gas passage 1210 of the pack cross beam 1200 does not flow back to the other connecting part 440 blocked by the rupture disk 450, but may be guided in the direction of separate gas exhaust ports (not shown) provided in the pack cross beam 1200. That is, the gas exhaust port communicates with the outside air, and other connection parts 440 are blocked with the rupture disk 450, so that the gas flow in the gas passage 1210 of the pack cross beam 1200 may be guided directly in the direction of the gas exhaust port. Even within the pack cross beam 1200, the independent venting path for each battery cell unit 100 is maintained, thereby making it possible to prevent thermal runaway transition between battery cells 110.

In addition, the pack cross beam 1200 may include a plurality of mesh parts 1230 that partition the gas passage 1210, and the mesh parts 1230 may be located at each point between the connecting parts 440 along the longitudinal direction of the pack cross beam 1200. Here, the longitudinal direction of the pack cross beam 1200 may be the direction in which the pack cross beam 1200 extends, which may be the direction in which the battery cell units 100 are stacked. In FIG. 12, the longitudinal direction of the pack cross beam 1200 is a direction that is parallel to the Y axis. The mesh part 1230 may be formed from a metal material.

The pack cross beam 1200 provided with the mesh part 1230 can once again filter flames or particles passing through the gas passage 1210. Additionally, it exhibits the effect of decreasing temperature while the gas passes through the mesh part 1230.

On the other hand, referring to FIGS. 1, 6 and 11 again, a thermal resin layer 1300 formed by applying thermal resin may be located on the bottom part 1100F of the pack tray 1100, and the battery cell assembly 100A may be placed on the thermal resin layer 1300. The thermal resin may include a thermally conductive adhesive material, and specifically, it may include at least one of a silicone material, a urethane material, or an acrylic material. The thermal resin may be in a liquid state during application, but may be cured after application, thereby functioning to fix the battery cell assembly 100A. In addition, the thermal resin has excellent heat conduction properties and can quickly discharge heat generated in the battery cell 110 to the outside through the lower side of the battery pack 1000.

As mentioned above, the cell cover 200 according to the present embodiment may include a side surface part 210 and an upper surface part 220, and the lower side may be open based on the battery cell 110 located inside the cell cover 200. In the case of the battery cell assembly 100A including the battery cell unit 100 having such a structure, the battery cells 110 may directly face the bottom part 1100F of the pack tray 1100. Additionally, the battery cells 110 included in the battery cell assembly 100A may directly contact the thermal resin layer 1300 provided on the bottom part 1100F of the pack tray 1100. Because the battery cells 110 are in direct contact with the thermal resin layer 1300 of the battery pack 1000, the cooling performance of the battery pack 1000 can be further improved. The heat generated from each battery cell 110 is directly transferred to the bottom part 1100F of the pack tray 1100 and is immediately released, thereby improving cooling performance. In this case, a structure such as a frame is not interposed between the battery cell 110 and the bottom part 1100F of the pack tray 1100, and there is only a thermal resin layer 1300 for heat transfer. Therefore, because the heat transfer path is simplified and the air gap between each layer can be reduced, the cooling efficiency and performance can be increased.

A heat sink 1400 may be located between the thermal resin layer 1300 and the bottom part 1100F of the pack tray 1100. A cooling channel 1400C, which is a space in which a coolant flows, may be provided inside the heat sink 1400. Heat generated from each battery cell 110 may be discharged to the outside through the thermal resin layer 1300, the heat sink 1400, and the bottom part 1100F of the pack tray 1100.

Next, the busbar module 300 of the battery cell unit 100 according to an embodiment of the present disclosure will be described in detail.

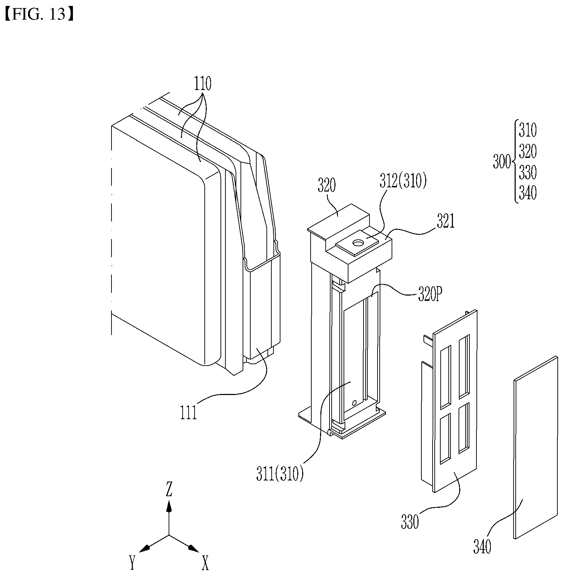

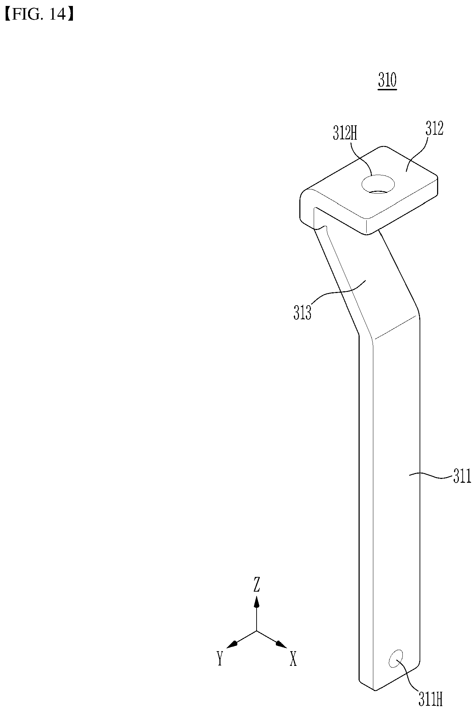

FIG. 13 is an exploded perspective view which enlarges and shows a battery cell and a busbar module included in the battery cell unit of FIGS. 5 and 6. FIG. 14 is a perspective view showing a busbar included in the busbar module of FIGS. 5 and 6.

Referring to FIGS. 5, 6, 8, 13 and 14, the battery cell unit 100 according to this embodiment may include at least one busbar module 300 that covers at least a part of the battery cell 110 where the electrode lead 111 is disposed. An opening part 200P may be formed in the cell cover 200 according to this embodiment. In the cell cover 200, opening parts 200P may be formed on both sides of the direction in which the electrode lead 111 protrudes from the battery cell 110. The busbar module 300 can be mounted in such an opening part 200P.

The busbar module 300 may include a busbar 310 connected to the electrode lead 111. The busbar 310 according to this embodiment is a member for electrical connection between the battery cells 110, and may include a metal material such as copper or aluminum. More specifically, the busbar 310 may include a lead coupling part 311 coupled to the electrode lead 111 of the battery cell 110 and a terminal part 312 extending from the lead coupling part 311.

When the busbar 310 is erected with respect to the ground, the lead coupling part 311 may extend vertically, and may be coupled to the electrode lead 111 of the battery cell 110 by a method such as welding. The terminal part 312 is a portion exposed to the outside of the cell cover 200, which is a portion for guiding electrical connection of the battery cell unit 100. This terminal part 312 may be formed with a hole 312H provided in order to couple the terminal part 312 with an external busbar.

On the other hand, the busbar 310 according to this embodiment may further include a bent part 313 located between the lead coupling part 311 and the terminal part 312. Such a bent part 313 may be a portion of the lead coupling part 311 that extends obliquely at a predetermined angle. When the lead coupling part 311 of the busbar 310 is coupled with the electrode lead 111, the bent part 313 may be arranged so as to face the inner direction of the cell cover 200 rather than the electrode lead 111. As shown in FIG. 3, the upper parts of the sealing parts 114s at both end parts 114a and 144b of the cell body 113 may be cut. In order to correspond to the shape of both end parts 114a and 144b of the cell body 113, the busbar 310 may be provided with a bent part 313 that extends obliquely at a predetermined angle.

As shown in FIG. 8, the cell cover 200 according to the present embodiment may be formed with an incision shape 200N that exposes a part of the busbar 310. The cell cover 200 includes a cover part 230 that protrudes from an end part of the cell cover 200 due to the incision shape 200N.

At the upper end of the opening part 200P of the cell cover 200, a part of the side surface part 210 and a part of the upper surface part 220 may be incised to provide an incision shape 200N. In the side surface part 210, unlike the portion indented according to the incision shape 200N, the portion that is not incised corresponds to the cover part 230 having a relatively protruding shape. That is, the incision shape 200N and the cover part 230 may be provided in the opening part 200P.

A part of the busbar 310 may be exposed toward the upper part of the cell cover 200 through the incision shape 200N. More specifically, the terminal part 312 may be exposed toward the upper part of the cell cover 200 through the incision shape 200N. Additionally, the upper side 230U of the cover part 230 and the terminal part 312 may be spaced apart by the incision shape 200N.

The incision shape 200N may be changed depending on the position and size of the busbar 310 in the busbar module 300 according to the present embodiment. The incision shape 200N can prevent contact between the cell cover 200 and the busbar 310, thereby ensuring electrical insulation properties of the busbar module 300. The incision shape 200N can be set to a range where the electrical insulation of the bus bar module 300 can be secured. For example, when the overall position of the busbar 310 or the position of the terminal part 312 on the busbar 310 is adjusted to the lower side, the incision shape 200N may be further incised in the downward direction. Particularly, the cell cover 200 may include a metal material to support and protect the at least one battery cell 110 arranged at its inside. At this time, since the cell cover 200 according to this embodiment is provided with an incision shape 200N, the busbar, especially the terminal part 312, contacts the cell cover 200, thereby preventing occurrence of short circuits and ensuring the electrical insulation of the busbar module 300.

On the other hand, the cover part 230 of the cell cover 200 may cover the side surface of the busbar module 300. More specifically, the cell cover part 230 may cover the side surface of the busbar frame 320 of the busbar module 300. Accordingly, the cover part 230 can protect the busbar module 300 from external shocks, vibrations, and the like, and the busbar module 300 can be stably mounted on the opening part 200P of the cell cover 200.

Further, the weight of the cell cover 200 can be reduced by the incision shape 200N provided in the cell cover 200. Thereby, it is possible to further improve the energy density of the battery cell unit 100 and the battery cell assembly 100A including the same and also reduce the weight thereof to reduce the manufacturing costs.

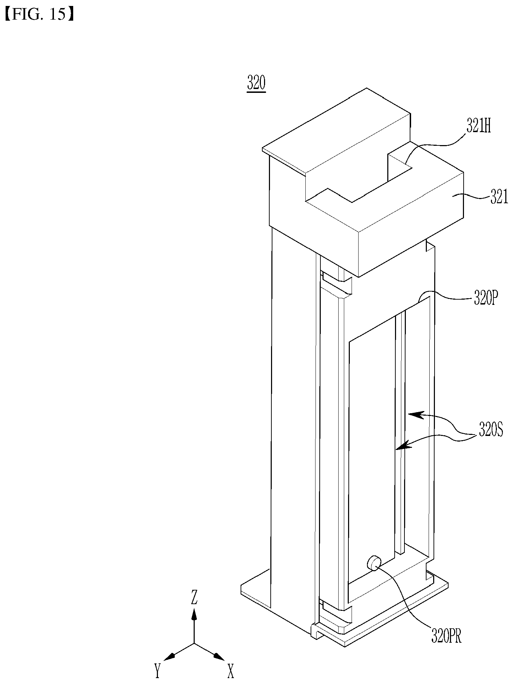

FIG. 15 is a perspective view showing a busbar frame included in the busbar module of FIGS. 5 and 6.

Referring to FIGS. 13 to 15 together, the busbar module 300 according to this embodiment may further include a busbar frame 320 on which the busbar 310 is mounted and which includes an electrically insulating material.

The busbar frame 320 including an electrically insulating material may cover at least a part of the busbar 310. Accordingly, the busbar frame 320 can prevent the busbar 310 contacting a part other than the electrode lead 111 and causing a short circuit.

The busbar frame 320 may include a perimeter part 321 that surrounds the circumference of the terminal part 312 and is mounted in the incision shape 200N of the cell cover 200. The perimeter part 321 may be formed with an upper hole 321H, and the busbar 310 may be inserted into the internal space of the busbar frame 320 through the upper hole 321H. The busbar 310 can be fixed inside the busbar frame 320 by various methods. For example, a method in which the protrusion part 320PR provided in the inner space of the busbar frame 320 is inserted into the hole 311H formed in the busbar 310 can be applied.

On the other hand, the busbar frame 320 may be formed with a slit 320S. After the electrode lead 111 of the battery cell 110 passes through the slit 320S, it may be bent and coupled to the lead coupling part 311 of the busbar 310. The method of coupling the electrode lead 111 and the lead coupling part 311 is not especially limited, but as an example, welding junction can be applied. The busbar frame 320 may be formed with a busbar opening part 320P, and welding work between the electrode lead 111 and the lead coupling part 311 can be performed through this busbar opening part 320P. If the coupling between the electrode lead 111 and the lead coupling part 311 is completed, the busbar cover 330 and the insulating sheet 340 are assembled to the busbar frame 320 while covering the busbar opening part 320P.

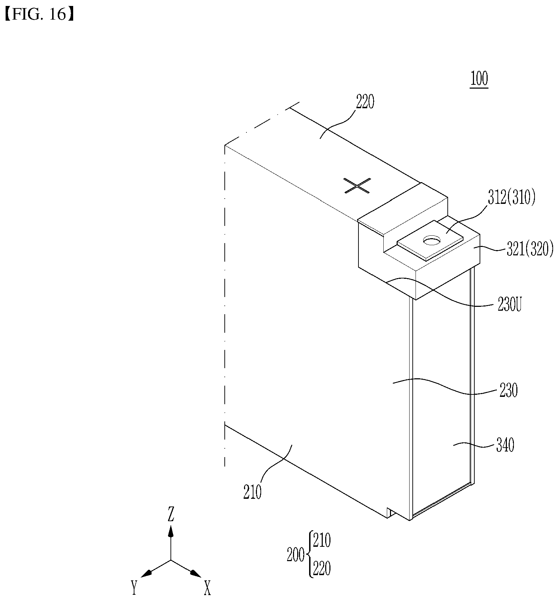

FIG. 16 is a partial view which enlarges and shows a portion where the busbar module is mounted in the battery cell unit of FIG. 5.

Referring to FIGS. 13 to 16 together, according to this embodiment, the perimeter part 321 surrounding the terminal part 312 of the busbar 310 may be located between the terminal part 312 and the cover part 230. The upper side 230U of the cover part 230 and the terminal part 312 may be spaced apart by the incision shape 200N, and also the perimeter part 321 made of an electrically insulating material is interposed between the terminal part 312 and the cover part 230, thereby further ensuring the electrical insulation of the busbar module 300. While the perimeter part 321 of the busbar frame 320 is assembled to the incision shape 200N of the cell cover 200, structural stability and electrical insulation of the busbar module 300 can be improved.

Next, the structure of the battery cell assembly 100A according to an embodiment of the present disclosure will be described.

Referring to FIGS. 2 to 6 together, the battery cell assembly 100A of this embodiment may include a plurality of battery cell units 100, a support plate 120 that supports one side of the battery cell unit 100 located at the outermost part of the plurality of battery cell units 100, an end cover 130 that covers the front surface and the rear surface of the plurality of battery cell units 100, and a fixing unit 140 that couples a plurality of battery cell units 100 to each other. Moreover, the battery cell assembly 100A of this embodiment may further include a handle unit 150.

As mentioned above, in the present embodiment, a plurality of battery cells 110 are not housed in a separate module case and mounted on the pack tray 1100 of the battery pack 1000, but can be mounted directly on the pack tray 1100 in a state of being partially covered by a cell cover 200 having a simplified structure. Through such a structure of the battery cell unit 100, the weight and volume of the entire battery pack 1000 can be reduced and the energy density of the battery pack 1000 can be improved. In addition, damage of the battery cells 110 occurring during the process of directly mounting multiple battery cells 110 in the case and using them can be prevented, and swelling control of the battery cell and design of the gas venting path can be easily performed.

On the other hand, prior to the description, the battery cell unit 100 may have a hexahedral shape having horizontal (length), vertical (width), and thickness, wherein the longitudinal direction may be the X-axis, the widthwise direction may be the Z-axis, and the thickness direction may be the Y-axis. The plurality of battery cell units 100 may be arranged successively along the thickness direction (Y-axis direction), and the thickness direction (Y-axis direction) may be referred to as a stacking direction of the battery cell unit 100.

Here, the two surfaces facing each other in the longitudinal direction (X-axis direction) of the battery cell unit 100 may be referred to as a front surface and a rear surface, the two surfaces facing each other in the thickness direction (Y-axis direction) of the battery cell unit 100 may be referred to as side surfaces, and the two surfaces facing each other in the widthwise direction (Z-axis direction) of the battery cell unit 100 may be referred to as an upper surface and a lower surface.

The battery cell units 100 may be formed in plural numbers, and the plurality of battery cell units 100 may be arranged side by side in one direction. The battery cell units 100 may be stacked in one direction and housed in the pack tray 1100. The battery cell units 100 may be arranged successively such that the side surfaces thereof and the side surfaces of adjacent battery cell units 100 are parallel to each other.

The battery cell unit 100 may be arranged in upright along the Z-axis direction so that its side surface is perpendicular to the pack tray 1100. The battery cell unit 100 may be arranged such that its lower surface corresponds to the bottom part 1100F of the pack tray 1100.

The support plate 120 can be for maintaining the overall shape of the stacked battery cell units 100. The support plate 120 can be for supporting the stacked battery cell unit 100. In the battery pack 1000, the battery cell unit 100 may be arranged such that one surface thereof is perpendicular to the bottom part 1100F of the battery pack 1000, and the support plate 120 may support one surface of the battery cell unit 100 so that the one surface thereof can maintain an upright state. The support plate 120 can prevent the plurality of battery cell units 100 from being spaced apart from each other, thereby fixing relative positions between the battery cell units 100. The support plate 120 may be a plate-shaped member and may supplement the stiffness of the battery cell assembly 100A instead of the module frame.

The support plate 120 may be arranged on one surface of the outermost battery cell unit 100 among the stacked battery cell units 100. The support plate 120 may be arranged on the side surface of the outermost battery cell unit 100 among the stacked battery cell units 100.

Here, the support plates 120 provided in the battery cell assembly 100A of this embodiment may be formed in two. The support plate 120 may comprise a first support plate 120a and a second support plate 120b. A pair of support plates 120 may be provided at both ends in the stacking direction of the stacked battery cell units 100. The first support plate 120a contacts the outermost battery cell unit 100 on one side of the stacked battery cell units 100, and the second support plate 120b may contact the outermost battery cell unit 100 on the other side of the stacked battery cell units 100.

The support plate 120 may be made from various materials, and may be provided by various manufacturing methods. As an example, the support plate 120 may be made from a metal material, and an example of the metal material may be aluminum. As another example, the support plate 120 may be made from a combination of aluminum and polymer synthetic resin through insert molding. However, the material and manufacturing method of the support plate 120 should not be limited by the contents described above, and it is possible to include various materials not mentioned or to make using other manufacturing methods.

The support plate 120 may include a support part 122 that supports the battery cell unit 100, a cover coupling part 124 for coupling with the end cover 130 and a handle coupling part 126 for coupling with the handle unit 150.

The support part 122 corresponds to the majority of the area of the support plate 120, and may have a plate-like shape so as to support the battery cell unit 100. The support part 122 may have a shape similar to the side surface shape of the battery cell unit 100. The plate-shaped support part 122 may include both side edges in the longitudinal direction (X-axis direction) and in the width direction (Z-axis direction).

On the other hand, the support plate 120 and the plurality of battery cell units 100 are coupled by the fixing unit 140, thereby being able to restrict relative positional movement. For this purpose, the support part 122 may be formed with a plate fastening hole 123 into which the fixing unit 140 is inserted. As will be described later, the plate fastening hole 123 may be formed at a position corresponding to the cell unit fastening hole 115 of the cell cover 200 included in the battery cell unit 100. The plate fastening hole 123 may be located close to an end part in the longitudinal direction (X-axis direction) of the support plate 120. This can be for preventing the battery cell 110 from being damaged by the fixing unit 140 penetrating through the support plate 120 and the cell cover 200 included in the battery cell unit 100.

The number of the plate fastening hole 123 formed in the support plate 120 may be one. However, in order to stably couple the plurality of battery cell units 100 and the support plate 120, the fixing unit 140 is preferably formed in plural numbers, so that the support plate 120 can be formed with a plurality of plate fastening holes 123. As a specific example, the fixing unit 140 provided in the battery cell assembly 100A may be formed in two, and the plate fastening holes 123 may be respectively formed at portions close to both ends in the longitudinal direction (X-axis direction) of the support plate 120. When the plate fastening hole 123 is formed in plural numbers, the cell unit fastening holes 115 in each cell cover 200 may also be formed in plural numbers. At this time, the plurality of plate fastening holes 123 and the plurality of cell unit fastening holes 115 formed in each cell cover 200 may correspond to each other.

The cover coupling part 124 may provide a coupling surface between the support plate 120 and the end cover 130. The cover coupling part 124 may have a shape extending from one edge of the support part 122.

The cover coupling part 124 may be formed at one edge corresponding to the end cover 130 among the edges of the support part 122. The end cover 130 can be arranged close to the end part in the longitudinal direction (X-axis direction) of the support plate 120, and the cover coupling part 124 can be formed at an edge in the longitudinal direction (X-axis direction) of the support part 122 to provide a coupling surface with the end cover 130. The cover coupling part 124 may have a shape extending toward the end cover 130 from an edge in the longitudinal direction (X-axis direction) of the support part 122. The cover coupling part 124 may have a shape extending in parallel to one surface of the support part 122. At this time, the end cover 130 may be arranged such that an end part in the longitudinal direction (Y-axis direction) thereof corresponds to an end part in the longitudinal direction (X-axis direction) of the support plate 120.

The number of the cover coupling part 124 formed in one support plate 120 may be two. The cover coupling parts 124 may be located at each of two edges of the support parts 122 facing each other. As a more specific example, the end covers 130 may be formed in two, and the two end covers 130 may be arranged so as to correspond to end parts in the longitudinal direction (X-axis direction) of one support plate 120. The cover coupling part 124 is formed at each of both edges in the longitudinal direction (X-axis direction) of the support part 122, and the two cover coupling parts 124 may respectively correspond to the two end covers 130. The cover coupling part 124 located at one end part in the longitudinal direction (X-axis direction) of the support plate 120 may correspond to one end cover 130, and the cover coupling part 124 located at the other end part may correspond to the other end cover 130. In this manner, the cover coupling part 124 may be formed in plural numbers on the support part 122, and each cover coupling part 124 may be coupled to a cover extension part 134 formed on each end cover 130.

On the other hand, the support plates 120 provided in the battery cell assembly 100A may be formed in two, wherein one end part and the other end part in the longitudinal direction (X-axis direction) of the pair of support plates 120 may respectively correspond to one end part and the other end part in the longitudinal direction (Y-axis direction) of the pair of end covers 130. Thereby, one end part in the longitudinal direction (Y-axis direction) of the end cover 130 may correspond to the cover coupling part 124 formed on the first support plate 120a, and the other end part may correspond to the cover coupling part 124 formed on the second support plate 120b.

The cover coupling part 124 may be formed with a second plate fastening hole 125 for coupling with the end cover 130. The number of the second plate fastening hole 125 may be one, or may also be two or more. As an example, the number of the second plate fastening hole 125 may be one. In such a case, the coupling stability of the end cover 130 can be supplemented in accordance with the shape of the end cover 130 or the shape of other members. Further, when the number of the second plate fastening hole 125 is one, the manufacturing costs can be reduced and the manufacturing process can be simplified. Further, as another example, the second plate fastening hole 125 may be formed in two. In such a case, the reliability of coupling of the end cover 130 can be improved.

The handle coupling part 126 may provide a coupling surface between the support plate 120 and the handle unit 150. The handle coupling part 126 can be coupled to at least one handle unit 150.

Here, the handle unit 150 can stably seat the battery cell assembly 100A inside the pack tray 1100, and may include a handle that can be gripped by a user. One end part of the handle unit 150 may be detachably coupled to the support plate 120, and the handle unit can be removed from the support plate 120 after the mounting of the battery cell assembly 100A is completed.

The handle coupling part 126 may be formed in a shape extending from one edge of the support part 122. The handle coupling part 126 may be located at one end part in the widthwise direction (Z-axis direction) of the support part 122. More specifically, it may be located on the upper side based on the state in which the battery cell assembly 100A is mounted. This may facilitate removal of the handle unit 150 after the mounting of the battery cell assembly 100A is completed.

The end cover 130 can be protecting the front surface or the rear surface of the plurality of battery cell units 100. The end cover 130 can cover the front surface or the rear surface of the plurality of battery cell units 100. The end cover 130 may be located at end parts in the longitudinal direction of the stacked battery cell units 100. The end covers 130 may be formed two, and the two end covers 130 may be respectively provided at both end parts in the longitudinal direction of the stacked battery cell units 100.

The end cover 130 may integrally cover the terminal portions of the battery cells included in the plurality of battery cell units 100. The end cover 130 may comprise body parts 132 corresponding to electrode lead 111 of the battery cells 110 included in the plurality of battery cell units 100, and a cover extension part 134 that extends vertically from one edge of the body part 132 and couples to the support plate 120.

The body part 132 can cover a front surface or a rear surface of the plurality of battery cell units 100. The body part 132 may be located at an end part in the longitudinal direction of the plurality of battery cell units 100. The body part 132 may cover the end parts in the longitudinal direction of the plurality of battery cell units 100. The body part 132 may cover terminal portions of the battery cells included in the plurality of battery cell units 100. Here, the body part 132 may also be referred to as a 'terminal cover part'.

The body part 132 may have a nearly plate shape. The plate-shaped body part 132 may include both side edges in the longitudinal direction (Y-axis direction) and both side edges in the widthwise direction (Z-axis direction).

The body part 132 may be formed with a cover venting hole 133. The cover venting hole 133 may be formed in plural numbers, and the plurality of the cover venting holes 133 may correspond to each battery cell unit 100. However, each cover venting hole 133 does not necessarily have to correspond to one battery cell unit 100, and a plurality of cover venting holes 133 can correspond to one battery cell unit 100, or a plurality of battery cell units 100 can correspond to one cover venting hole 133. The end cover 130 can protect the battery cell unit 100 from an external environment by the cover venting hole 133 and also discharge gas or the like generated from the battery cell 110 to the outside. Thereby, cascading thermal runaway phenomena of the battery cell assembly 100A can be prevented.

The cover extension part 134 can provide a coupling surface for coupling between the end cover 130 and the support plate 120.

The cover extension part 134 may be formed at one edge corresponding to the support plate 120 among the edges of the body part 132. The support plate 120 may be arranged close to the end part in the longitudinal direction (Y-axis direction) of the end cover 130, and the cover extension part 134 may be formed at an edge in the longitudinal direction (Y-axis direction) of the body part 132 to provide a coupling surface with the support plate 120. The cover extension part 134 may have a shape extending from one edge of the body part 132 toward the support plate 120. The cover extension part 134 may have a shape extending from one edge of the body part 132 toward the support plate 120 in a direction perpendicular to one surface of the body part 132. At this time, the end cover 130 may be located at the end part in the longitudinal direction (X-axis direction) of the support plate 120. The end cover 130 may be arranged such that the end part in the longitudinal direction (Y-axis direction) corresponds to the end part in the longitudinal direction (X-axis direction) of the support plate 120.

The cover extension part 134 may correspond to an end part in the longitudinal direction (X-axis direction) of the support plate 120. The cover extension part 134 may overlap with an end part in the longitudinal direction (X-axis direction) of the support plate 120. The cover extension part 134 may be located outside the end part in the longitudinal direction (X-axis direction) of the support plate 120. The cover extension part 134 may be coupled with an end part in the longitudinal direction (X-axis direction) of the support plate 120.

The number of the cover extension parts 134 formed on one end cover 130 may be two. The two cover extension parts 134 may include a first cover extension part 134a and a second cover extension part 134b that are respectively formed on two edges of the body part 132 facing each other. The first cover extension part 134a and the second cover extension part 134b may be formed at both edges in the longitudinal direction (Y-axis direction) of the body part 132.

More specifically, the first support plate 120a and the second support plate 120b may be located so as to correspond to both end parts in the longitudinal direction (Y-axis direction) of the end cover 130. The first cover extension part 134a located at one end part in the longitudinal direction (Y-axis direction) of the end cover 130 may correspond to the first support plate 120a, and the second cover extension part 134b located at the other end part may correspond to the second support plate 120b. The first cover extension part 134a and the second cover extension part 134b may have a shape extending perpendicularly to one surface of the body part 132 toward the first support plate 120a and the second support plate 120b. The first cover extension part 134a and the second cover extension part 134b may respectively correspond to end parts of the first support plate 120a and the second support plate 120b. The first cover extension part 134a and the second cover extension part 134b can be respectively overlapped and coupled with end parts of the first support plate 120a and the second support plate 120b. The first cover extension part 134a may be located outside the first support plate 120a, and the second cover extension part 134b may be located outside the second support plate 120b. Here, the outer side of a specific member may be described on the basis of the center of the battery cell assembly 100A. In addition, as will be described later, the first cover extension part 134a and the second cover extension part 134b can respectively correspond to the cover coupling parts 124 formed on the first support plate 120a and the second support plate 120b.

The cover extension part 134 may correspond to the cover coupling part 124 of the support plate 120. The cover extension part 134 may overlap with the cover coupling part 124. The cover extension part 134 may be coupled to the cover coupling part 124 of the support plate 120. More specifically, the cover extension part 134 may be located outside the cover coupling part 124, and an inner side surface of the cover extension part 134 may contact an outer side surface of the cover coupling part 124.

The outer side surface of the cover coupling part 124 may have a shape recessed toward the inner side surface so that the cover extension part 134 and the cover coupling part 124 can easily overlap each other, and the cover extension part 134 can be seated on the recessed outer side surface. Further, each corner of the cover extension part 134 may have a round shape. Thereby, when the end cover 130 is mounted on the combination of the battery cell unit 100 and the support plate 120, interference between the support plate 120 and the end cover 130 can be minimized.

On the other hand, conventionally, in order to protect the battery cells from an external environment, a module frame that covers the upper, lower, left and right surfaces of the stacked battery cells and end plates that cover the front and rear surfaces thereof are provided. Also, at the outside of the battery cells, the module frame and the end plate are mainly coupled by welding. However, in the present embodiment, by omitting the module frame, the end cover 130 and the support plate 120 are coupled, and the end cover 130 and the support plate 120 are coupled by a fastening member, so that a welding process may not be added. Thereby, the manufacturing process can be completed more easily and quickly. Further, a cover extension part 134 is formed on the end cover 130, and the support plate 120 is formed with a cover coupling part 124 corresponding thereto, so that the coupling between the end cover 130 and the support plate 120 can be stably and easily performed.

The cover extension part 134 may be formed with a cover fastening hole 135 for coupling with the support plate 120. The cover fastening hole 135 may correspond to the second plate fastening hole 125 formed in the cover coupling part 124. In the manufacturing process of the battery cell assembly 100A of this embodiment, the end cover 130 may be arranged so as to be located on the same axis of the cover fastening hole 135 and the second plate fastening hole 125, and a second fixing unit may be inserted into the cover fastening hole 135 and the second plate fastening hole 125, thereby being able to couple the end cover 130 and the support plate 120. Here, the second fixing unit may be a fastening member such as a bolt or a rivet.

The number of the cover fastening hole 135 may be one, but may also be two or more. For this information, refer to the description of the second plate fastening hole 125. When the cover fastening hole 135 is formed in plural numbers, the second plate fastening hole 125 may also be formed in plural numbers, and the plurality of cover fastening holes 135 and the second plate fastening holes 125 may correspond to each other.

On the other hand, the battery cell units 100 of the present embodiment may be coupled by the fixing unit 140, and the relative movement of the battery cell units 100 may be restricted by the fixing unit 140. The fixing unit 140 may couple the support plate 120 and the battery cell unit 100. The fixing unit 140 may pass through the plate fastening hole 123 formed in the first support plate 120a, then pass through the cell unit fastening hole 115 formed in the cell cover 200 included in the plurality of cell units 100, and may pass through the plate fastening hole 123 formed in the second support plate 120b. Thereby, relative movement between the support plate 120 and the cell unit 100 is restricted, and the battery cell assembly 100A can be made into blocks.

In this manner, the plurality of battery cell units 100 can be made in blocks by the fixing unit 140 and the relative positions of the battery cell units 100 can be fixed, thereby making the handling of the battery cell assembly 100A easier. That is, the mounting of the battery cells 110 may be facilitated by the fixing unit 140, and a structure required for mounting the battery cells 110 is simplified, thereby capable of achieving effects such as weight reduction and manufacturing cost reduction.

The fixing unit 140 can be provided in a shape of a long bolt. The fixing unit 140 may be provided as a long bolt having a sufficient length to penetrate through all of the plurality of battery cell units 100 included in the battery cell assembly 100A.

On the other hand, the figures show that the fixing unit 140 penetrates through the lower side portion of the battery cell assembly 100A, but this is not necessarily the case. It is also possible to provide at other positions as long as the battery cell 110 and the electrode lead 111 are not damaged. For example, the fixing unit 140 may be provided so as to penetrate through an upper side portion of the battery cell assembly 100A, whereby the positions of the plate fastening hole 123 and the cell unit fastening hole 115 through which the fixing unit 140 passes can be adjusted.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery cell assemblies according to embodiments of the present disclosure described above can be mounted together with various control and protection systems such as a BMS(battery management system), a BDU(battery disconnect unit), and a cooling system to form a battery pack.

The battery pack can be applied to various devices. For example, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments of the present disclosure, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery cell unit
100A: battery cell assembly
110: battery cell
200: cell cover
200V: venting part
300: busbar module
400: venting unit
410: venting channel
1100: pack tray
1200: pack cross beam
1210: gas passage

## Claims

1. A battery pack comprising:
a battery cell assembly including a plurality of stacked battery cell units;
a pack tray on which the battery cell assembly is mounted;
a pack cross beam located on one side surface of the battery cell assembly on the pack tray and provided with a gas passage at its inside; and
a venting unit located on an upper part of the battery cell assembly,
wherein the battery cell unit comprises at least one battery cell and a cell cover that partially surrounds the at least one battery cell,
wherein the cell cover is formed with at least one venting part,
wherein the venting unit comprises a plurality of venting channels that guide the gas jetted from the venting unit to the gas passage, and
wherein each of the venting channels is located so as to correspond to each of the battery cell units.

2. The battery pack according to claim 1, wherein:
each of the venting channels has independent venting spaces that are not shared with each other.

3. The battery pack according to claim 1, wherein:
the venting channels are partitioned by a partition wall portion inside the venting unit.

4. The battery pack according to claim 1, wherein:
the venting channels extend along the longitudinal direction of the battery cell units, which is perpendicular to the direction in which the battery cell units are stacked.

5. The battery pack according to claim 1, wherein:
each of the venting channels communicate with each of the battery cell units on a one-to-one basis.

6. The battery pack according to claim 1, wherein:
the cell cover has a shape in which the lower side is open.

7. The battery pack according to claim 1, wherein:
the cell cover comprises an upper surface part and side surface portions, and
at least one venting part is formed on the upper surface part.

8. The battery pack according to claim 1, wherein:
the venting part has the shape of a hole passing through a part of the cell cover.

9. The battery pack according to claim 1, wherein:
the venting part is a portion of the cell cover which has a weaker stiffness than the portion adjacent thereto, and ruptures when a force or heat exceeding a certain pressure is applied.

10. The battery pack according to claim 1, wherein:
the venting unit comprises inlets that communicate with the venting part.

11. The battery pack according to claim 10, wherein:
the inlet is provided with a mesh structure.

12. The battery pack according to claim 1, wherein:
one of the venting unit and the pack cross beam is formed with a connecting part, and the other is formed with a connecting hole coupled to the connecting part, and
each of the connecting parts communicate with each of the venting channels on a one-to-one basis.

13. The battery pack according to claim 12, wherein:
the connecting parts are fitted and coupled into the corresponding connecting holes on a one-to-one basis.

14. The battery pack according to claim 12, wherein:
a rupture disk having a structure that ruptures at a specific pressure or higher is provided inside at least one of the connecting part or the connecting hole.

15. The battery pack according to claim 12, wherein:
the venting channel communicates with the gas passage of the pack cross beam via the connecting part and the connecting hole.

16. The battery pack according to claim 15, wherein:
the pack cross beam comprises a plurality of mesh parts that partitions the gas passage, and
the mesh parts are located at each point between the connecting parts along the longitudinal direction of the pack cross beam.

17. A device comprising the battery pack according to claim 1.
